# DEMANDE DE BREVET EUROPEEN

(11) **EP 1 496 027 A1**
(43) Date de publication de la demande: **12.01.2005**
(21) Numéro de dépôt: 04291666.8
(22) Date de dépôt: 01.07.2004
(51) Int. Cl.: C03C 17/32, C04B 41/45, C04B 41/48

(54) **Procédé pour recouvrir une surface en verre ou en matière poreuse d'un matériau plastique**

(30) Priorité: 04.07.2003 FR 0308222
(71) Demandeur: Lifco Industrie, 76150 Buchy (FR)
(72) Inventeur: Iacob, Constantin, 76690 Saint Georges sur Fontaine (FR)
(74) Mandataire: Bentz, Jean-Paul

(57) **Abrégé**

L'invention se rapporte à un procédé pour recouvrir de manière uniforme, par au moins une couche d'un matériau plastique, la surface interne et/ou externe d'un corps creux ou bien la surface externe d'un corps plat en verre ou en matière poreuse telle que la céramique, consistant à chauffer ledit corps creux ou ledit corps plat à la température de ramollissement du matériau plastique, puis à appliquer le matériau plastique sur ledit corps chauffé, à l'aide d'un lit fluidisé.

Ce procédé se caractérise en ce qu'il consiste à effectuer un nettoyage thermomécanique préliminaire de ladite surface lors du chauffage de ladite surface.

L'invention se rapporte aussi aux corps creux ou plats susceptibles d'être obtenus selon le procédé.

## Description

La présente invention se rapporte à un procédé pour recouvrir de manière uniforme, par au moins une couche d'un matériau plastique, la surface interne et/ou la surface externe d'un corps creux en verre ou en matière poreuse, par exemple la céramique, ou bien, la surface externe d'un corps plat, en verre ou en matière poreuse, par exemple la céramique.

Les techniques connues jusqu'ici pour effectuer un revêtement sur des verres et céramiques consistent soit, à déposer de l'émail, soit à les recouvrir à l'aide d'une peinture liquide, notamment par la technique connue de laquage, flocage.

D'autres techniques existent par ailleurs pour effectuer une coloration dans la masse du verre ou de la céramique.

Malheureusement de telles techniques présentent l'inconvénient d'être polluantes vis-à-vis de l'environnement du fait de l'utilisation de composés chimiques nocifs, de présenter une faible tenue mécanique dans le temps (usure rapide), de se corroder rapidement et facilement, et enfin d'avoir un coût élevé lors de leur utilisation.

Aussi il subsiste le besoin de disposer d'un procédé pour recouvrir de manière uniforme la surface, tant intérieure qu'extérieure des verres et matières poreuses, d'au moins une couche de matériau plastique dans le but de décorer et/ou de protéger ladite surface des verres et matières poreuses.

L'invention a donc pour objet un procédé pour recouvrir de manière uniforme, par au moins une couche d'un revêtement plastique, la surface interne et/ou la surface externe d'un corps creux en verre ou en matière poreuse ou la surface externe d'un corps plat en verre ou en matière poreuse, consistant à chauffer ledit corps creux ou ledit corps plat à la température de ramollissement du matériau plastique, puis à appliquer le matériau plastique sur ledit corps chauffé à l'aide d'un lit fluidisé.

Ce procédé se caractérise en ce qu'il consiste à effectuer un nettoyage thermomécanique préliminaire de la surface interne et/ou de la surface externe dudit corps creux ou de la surface externe dudit corps plat lors du chauffage de ladite surface.

Le procédé selon l'invention présente l'avantage de permettre la décoration et/ou la protection de la surface en verre ou en matière poreuse grâce à la possibilité d'utiliser des mélanges de matériaux plastiques ayant par exemple différentes couleurs et/ou différentes résistances à l'usure mécanique, et de permettre le masquage de défauts importants tels que les joints de moule, présents sur certaines surface de verre ou de matière poreuse, par l'application de couche de matériau plastique suffisamment épaisse (environ 1 mm et plus).

Le procédé selon l'invention permet d'éviter l'émaillage intérieur et extérieur des corps creux poreux ou non.

En effet, l'épaisseur du revêtement est notamment fonction de la durée de mise en contact de la surface à traiter avec le lit fluidisé comprenant les particules de matière plastique.

Ce procédé procure en outre l'avantage de permettre un meilleur contrôle de l'épaisseur du revêtement de matériau plastique appliqué sur ladite surface en verre ou en matière poreuse.

Un autre avantage du procédé de l'invention est de pouvoir appliquer sur des surfaces en verre ou en matière poreuse des revêtements résistants à l'humidité qui présentent de bons résultats dans le temps en terme d'adhérence sur leur support en verre ou en matière poreuse, de résistance à la corrosion chimique vis-à-vis des composés avec lesquels le revêtement peut être en contact prolongé (contenance), ainsi que de bonnes résistances mécaniques par rapport à la casse.

L'utilisation de la technique en lit fluidisé dans le procédé selon l'invention présente, d'une part, l'avantage de permettre l'incorporation, dans le matériau plastique, des matériaux métalliques tels que des paillettes métalliques, permettant ainsi des effets particuliers de décoration de la surface du verre ou de la matière poreuse recouverte, et d'autre part, de pouvoir effectuer un revêtement sur les surfaces internes de corps creux en verre ou en matière poreuse en utilisant une technique (lit fluidisé) simple et particulièrement efficace en terme de qualité de résultats obtenus.

La technique de nettoyage préalable par abrasion des surfaces en verre ou en matière poreuse par lit fluidisé préliminaire, présente l'avantage de ne pas être polluante vis-à-vis de l'environnement par rapport aux techniques utilisées jusqu'ici qui utilisent notamment des bains de composés acides, tels que l'acide fluorhydrique.

Enfin, le procédé de l'invention présente l'avantage de présenter un coût de fonctionnement moindre par rapport à d'autres procédés connus jusqu'ici, puisqu'il permet d'utiliser deux lits fluidisés différents et successifs avec une seule étape de chauffage. En effet, l'utilisation du chauffage dans l'étape préliminaire de nettoyage de la surface à traiter permet ensuite le revêtement aisé du matériau plastique sans la nécessité d'un chauffage ultérieur complémentaire, et par conséquent onéreux.

L'invention a encore pour objet un corps creux en verre ou en matière poreuse susceptible d'être obtenu par le procédé décrit précédemment, et dont la surface interne et/ou externe est revêtue de manière uniforme par au moins une couche d'un matériau plastique.

Un autre objet de l'invention est un corps plat en verre ou en matière poreuse susceptible d'être obtenu par le procédé décrit précédemment, et dont la surface externe est revêtue de manière uniforme par au moins une couche d'un matériau plastique.

Le corps creux, tel que défini précédemment, peut contenir de l'eau, un composé chimique choisi parmi les alcools, les hydrocarbures, les composés aromatiques et leur mélanges.

De préférence, le nettoyage thermomécanique s'effectue en mettant en contact ladite surface avec un lit fluidisé préliminaire comprenant des particules abrasives, la mise en contact avec le lit fluidisé préliminaire étant effectuée successivement ou simultanément au chauffage de ladite surface.

Le matériau plastique peut être choisi parmi les polyamides, les polyesters, les époxy-polyesters et leur mélanges.

Les particules abrasives peuvent être choisies parmi le sable, l'alumine et leur mélange en différentes proportions.

De préférence, le lit fluidisé préliminaire est un lit non homogène dont les particules abrasives ont un diamètre moyen compris entre environ 100 et 300 µm, et peuvent être projetées avec un débit compris entre environ 1 et 10 m³N/h.

De préférence, le lit fluidisé comprenant le matériau plastique sous forme de particules peut être un lit homogène dont les particules ont un diamètre moyen compris entre environ 10 et 200 µm, et peuvent être projetées avec un débit compris entre environ 0.1 et 2 m³N/h.

La mise en contact dans le lit fluidisé préliminaire peut s'effectuer pendant une durée allant d'environ 1 à 10 minutes, et celle dans lit fluidisé comprenant le matériau plastique peut s'effectuer pendant une durée allant d'environ 1 à 30 secondes, et à une température allant d'environ 20 à 80 °C.

A l'issue de la seconde mise en contact avec un lit fluidisé (comprenant le matériau plastique), la surface traitée peut être soumise à une cuisson pendant 10 minutes à une température d'environ 100 à 300 °C.

La présence éventuelle d'une étape de cuisson permet d'homogénéiser le revêtement en matière poreuse, sur la surface en verre ou en matière poreuse, lorsque le revêtement ne l'est pas après revêtement avec le matériau plastique.

Après l'étape de cuisson, la surface traitée peut ensuite être refroidie, soit lentement en étant disposée à l'air à température ambiante, soit rapidement en étant trempée par exemple dans de l'eau.

Le refroidissement lent de la surface, revêtue et cuite, permet d'obtenir une surface présentant un aspect satiné, alors qu'un refroidissement rapide donne une surface à l'aspect brillant.

Chaque corps à nettoyer par abrasion, et à revêtir, peut être, soit, disposé dans un panier immergé dans le lit fluidisé, soit, disposé en ligne sur un convoyeur qui traverse le lit fluidisé.

A l'issue du chauffage, on peut insuffler de l'oxygène sur la surface à traiter afin d'améliorer sa mouillabilité, et par conséquent l'adhésion du matériau plastique.

L'invention va maintenant être décrite à l'aide des figures qui suivent, et qui permettent d'illustrer différents modes de fonctionnement possibles du procédé. Ces figures sont données simplement à titre d'illustration, et ne limitent en aucune façon l'objet de l'invention.
- la figure 1 représente une vue schématique en coupe de l'installation permettant la mise en oeuvre du procédé de l'invention qui illustre un revêtement de matériau plastique sur la surface externe d'un flacon en verre ou en matière poreuse ;
- la figure 2 représente une vue schématique en coupe de l'installation permettant la mise en oeuvre du procédé selon l'invention qui illustre un revêtement en matériau plastique sur la surface interne d'un flacon en verre ou en matière poreuse.

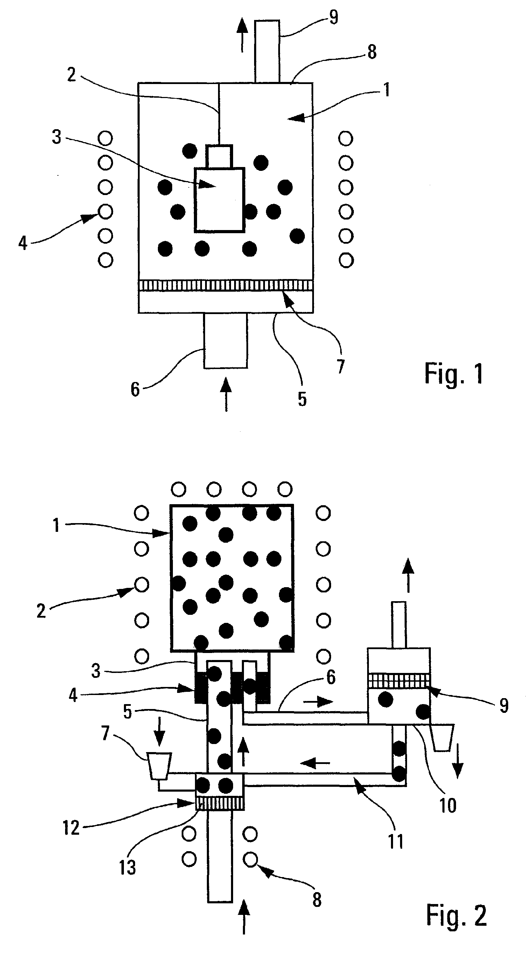

Comme le montre la figure 1, l'installation comprend une enceinte de traitement 1 fermée, sensiblement de forme parallélépipédique, dans laquelle est suspendu au bout d'un moyen d'accrochage 2 un flacon en verre 3. La figure représente l'accrochage du flacon par son goulot. Cette position permet d'effectuer correctement le revêtement de sa surface externe, sans avoir de dépôt trop important de matériau de revêtement sur le goulot.

L'enceinte 1 est entourée sur tout son diamètre d'une résistance chauffante 4. Sur la partie inférieure 5 de l'enceinte 1 est disposé un conduit 6 d'arrivée d'air ; la direction de l'air étant symbolisée par une flèche. L'air permet de fluidiser les particules constituées, par exemple, de sable pour le nettoyage abrasif de la surface à traiter, ou de matériau plastique lors de la phase de revêtement.

La partie inférieure 5 de l'enceinte 1 comprend une grille 7 de fluidisation dont le rôle est de distribuer l'air de fluidisation de manière homogène au travers du volume de l'enceinte.

La partie supérieure 8 de l'enceinte 1 comprend un moyen d'évacuation 9 de l'air de fluidisation comprenant des particules, ceci constitue les gaz de traitement ; cet air pouvant être ensuite traité ultérieurement afin de récupérer les particules en suspension, ou pouvant être recyclée pour fonctionner en boucle sur l'installation.

Le fonctionnement de ce procédé est le suivant.

Après avoir accroché le flacon 3 sur le moyen d'accrochage 2 de l'enceinte 1, et disposé dans le fond de l'enceinte des particules de sable, de l'air est insufflé au travers de la grille 7. Le gaz de traitement (air + particules de sable) qui ne constitue pas un lit fluidisé homogène est projeté rapidement, selon un débit important, environ 1 à 10 m³N/h sur la surface externe du flacon 3 avant d'être ensuite aspiré par le moyen d'évacuation 9. Les particules de sable ont un diamètre moyen d'environ 100 à 300µm.

En passant rapidement sur la surface du flacon 3, le sable chauffé effectue un nettoyage thermomécanique de la surface, par micro-ponçage, micro-polissage.

Cette étape de nettoyage par abrasion dure environ 1 à 10 minutes. Sa durée est fonction de la pression et du débit du lit fluidisé. La température de la résistance 4 est d'environ 100 à 300°C.

Les gaz d'évacuation, sortis de l'enceinte, sont ensuite traités et recyclés séparément.

Après cette étape préliminaire de nettoyage thermomécanique, la surface externe du flacon 3 présente un aspect micro-rugueux, et débarrassé de toutes impuretés néfastes à l'application correcte du matériau plastique.

A l'issue de cette première étape, le flacon est enlevé de cette enceinte, puis est disposé dans une enceinte similaire, cette fois remplie de particules de matériau plastique. Le fonctionnement de cette seconde enceinte est identique à celui exposé ci-dessus.

Cette fois, le lit fluidisé comprenant les particules de matière plastique d'un diamètre d'environ 10 à 200 µm est homogène.

Contrairement au lit fluidisé préliminaire, le déplacement des particules de matière plastique est relativement lent de manière à ne pas être abrasif. Le débit et la pression de ce lit sont fonction des caractéristiques techniques de l'installation. La pression peut être comprise entre 1 et 5 bars, et le débit entre environ 0.1 et 2 m³N/h.

La température de la résistance chauffante 4 est d'environ 20 à 100 °C, et la durée de mise en contact de la surface avec les particules de matière plastique est fonction de l'épaisseur de revêtement souhaitée.

La durée est par exemple de 30 secondes pour obtenir un revêtement d'environ 1 mm, en utilisant les caractéristiques physiques du lit exposés ci-dessus.

Les deux étapes de mise en contact avec le lit fluidisé peuvent également être effectuées au sein de la même enceinte, il suffit alors de remplacer les particules abrasives (par exemple sable et/ou silice) par les particules d'un ou plusieurs revêtement plastique. Lorsqu'on applique plusieurs matières plastiques, elles peuvent l'être successivement ou simultanément.

Comme le montre la figure 2, et contrairement à la représentation de la figure 1, le lit fluidisé est réalisé directement dans le corps creux à traiter.

Le lit fluidisé circule alors dans le corps creux.

L'installation comprend un corps creux 1 en céramique à revêtir, lui-même entouré d'une résistance chauffante 2.

Le corps creux 1 est disposé par le biais de son goulot 3 sur un bouchon 4 comprenant deux canalisations 5 et 6.

Selon cette seconde représentation, l'enceinte de revêtement est constituée par l'intérieur du flacon totalement fermé. La fermeture totale du flacon permet d'obtenir un nettoyage thermomécanique de meilleure qualité, puis une meilleure répartition du matériau plastique sur la surface interne du flacon.

La canalisation 5 permet d'injecter l'air de fluidisation dans le corps creux 1. Sur le long de cette canalisation 5, et en partant du goulot 3, se trouvent dans l'ordre un dispositif 7 de chargement en poudre (abrasive dans un premier temps, et de matière plastique dans un second temps) puis une seconde résistance chauffante 8 destinée à chauffer l'air de fluidisation dont l'arrivée est symbolisée par la flèche à l'entrée de la canalisation 5, avant son entrée dans l'installation.

La seconde canalisation 6 est reliée à un filtre à particules 9, dont la partie inférieure 10 est reliée à l'aide d'une canalisation 11 au dispositif 7 de chargement de poudre (abrasive ou de matière plastique) 7 afin de former une boucle de recyclage.

Contrairement à l'installation selon la figure 1, le lit fluidisé est créé à l'extérieur du flacon 1 avent d'être mis en circulation dans le flacon à traiter.

Avant d'être injecté dans l'intérieur du flacon, le lit est créé dans un réceptacle 12 disposé sur la canalisation 5 à l'intersection avec le dispositif 7 de chargement en poudre. Ce réceptacle 12 comprend également une grille destinée à répartir correctement l'air dans tout le volume du réceptacle 12.

Cette seconde installation fonctionne de la manière suivante.

La poudre de particules abrasives, chargée dans le dispositif 7, est injectée à l'aide de l'air de fluidisation dans la canalisation 5 vers l'ouverture du corps creux 1 à traiter.

Avec une augmentation de la vitesse de fluidisation, le lit fluidisé est propulsé à l'intérieur du flacon 1.

La première étape de propulsion de lit fluidisé s'effectue avec des particules abrasives, telles que de la silice, et la seconde avec des particules de matériau plastique. Ces deux étapes peuvent être effectuées sur la même installation après avoir remplacé les particules, ou alors sur deux installations différentes.

Lors de l'étape préliminaire de nettoyage thermomécanique la résistance 2 est chauffée à environ 100 à 300°C, et la résistance 8 à 20 à 100°C. Lors de cette étape, le débit du lit abrasif est d'environ 0.5 à 2 m³N/h, et les particules ont un diamètre d'environ 100 à 300 µm. Cette étape préliminaire dure environ 1 à 5 minutes.

Lors de l'étape consistant à revêtir la surface à traiter d'un matériau plastique, le revêtement intérieur du flacon 1, s'effectue en chauffant le flacon 1, à une température allant d'environ 100 à 300°C à l'aide de la résistance chauffante 2, pendant une durée allant de 1 à 10 minutes.

Les particules de matière plastique ont un diamètre moyen d'environ 10 à 200 µm. Cette seconde étape dure environ 5 à 30 secondes.

L'enceinte interne du flacon 1 est totalement étanche lors de l'application du procédé de l'invention, grâce à la présence d'un bouchon sur le goulot 3 du flacon 1 résistant aux paramètres physiques de traitement.

Lors des deux étapes de traitement, l'air de fluidisation circule en boucle dans l'installation avec une partie des particules recyclée. Elle est partiellement évacuée du flacon 1 à l'aide de la canalisation 6, pour être dirigée vers l'extérieur de l'installation au travers du filtre 9 ; le filtre 9 pouvant recueillir une partie des particules non utilisées en vue de leur recyclage en boucle.

L'air de fluidisation comprenant les particules abrasives ou les particules de matériau plastique, selon le cas, après avoir été extrait par la canalisation 6 puis filtré, est remis en circulation en boucle dans le lit fluidisé, ou alors, peut être dirigé vers l'extérieur de l'installation par un réglage adéquat de vannes( non représentées).

Le tableau I ci-dessous donne quelques exemples de surfaces et de revêtement en matériau plastique, ainsi que les conditions physiques optimales pour obtenir des revêtements de bonnes qualités.

**Tableau I**

| **Surface** | **Revêtement** | **T°C de cuisson** | **Temps(s) de trempe** | **Aspect du revêtement** |
|---|---|---|---|---|
| **Verre** | Polyamide | 250 | 2 à 5 | Dur Brillant |
| **Verre** | Polyamide | 250 | - | Dur Satiné |
| **Céramique** | Polyamide | 250 | 2 à 5 | Dur Brillant |
| **Céramique** | Polyamide | 250 | - | Dur Satiné |
| **Verre** | Copolymère à base de polyéthylène | 160 | 2 à 5 | Résiste aux chocs mécaniques Satiné |
| **Céramique** | Polymère à base de polyester | 180 | - | Lisse et brillant |
| **Verre** | Polymère à base d'époxy-polyester | 220 | - | Dur Lisse et brillant |
| **Céramique** | Polymère à base d'époxy-polyester | 220 | - | Dur Lisse et brillant |
| **Céramique** | Polymère à base de polyester | - | - | Lisse et brillant |
| **Verre** | Polymère à base d'époxy-polyester | - | - | Dur Lisse et brillant |
| **Céramique** | Polymère à base d'époxy-polyester | - | - | Dur Lisse et brillant |

Les 8 premiers exemples du tableau I ont été effectués en utilisant les étapes de cuisson et/ou de trempe selon le procédé selon l'invention. Les 3 derniers ont été réalisés sans étape de cuisson.

## Revendications

1. Procédé pour recouvrir de manière uniforme, par au moins une couche d'un matériau plastique, la surface interne et/ou la surface externe d'un corps creux en verre ou en matière poreuse par exemple en céramique ou la surface externe d'un corps plat en verre ou en matière poreuse, consistant à chauffer ledit corps creux ou ledit corps plat à la température de ramollissement du matériau plastique, puis à appliquer le matériau plastique sur ledit corps chauffé, à l'aide d'un lit fluidisé, **caractérisé en ce qu'**il consiste à effectuer un nettoyage thermomécanique préliminaire de la surface interne et/ou externe de la surface dudit corps creux ou de la surface externe dudit corps plat lors du chauffage de ladite surface.

2. Procédé selon la revendication 1, **caractérisé en ce que** le nettoyage thermomécanique s'effectue en mettant en contact ladite surface avec un lit fluidisé préliminaire comprenant des particules abrasives, la mise en contact avec le lit fluidisé préliminaire étant effectuée successivement ou simultanément au chauffage de ladite surface.

3. Procédé selon la revendication 1, **caractérisé en ce que** le matériau plastique est choisi parmi les polyamides, les polyesters, les époxy-polyesters et leur mélange.

4. Procédé selon la revendication 2, **caractérisé en ce que** les particules abrasives sont choisies parmi le sable, l'alumine et leur mélange.

5. Procédé selon la revendication 2, **caractérisé en ce que** le lit fluidisé préliminaire est un lit homogène dont les particules abrasives ont un diamètre moyen compris entre environ 100 et 300 µm, et sont projetées avec un débit allant d'environ 1 à 10 m³N/h.

6. Procédé selon la revendication 1, **caractérisé en ce que** le lit fluidisé comprenant le matériau plastique est un lit homogène dont les particules de matière plastique ont un diamètre moyen compris entre environ 10 et 200 µm, et sont projetées avec un débit allant d'environ 0.1 à 2 m³N/h.

7. Procédé selon la revendication 1, **caractérisé en ce que** chaque corps à nettoyer puis à revêtir est, soit disposé dans un panier immergé dans le lit fluidisé, soit disposé en ligne sur un convoyeur qui traverse le lit fluidisé.

8. Procédé selon la revendication 1, **caractérisé en ce que** le lit fluidisé est maintenu à une température allant d'environ 20° à 80°C.

9. Procédé selon l'une des revendications 1 à 8, **caractérisé en ce qu'**il consiste en outre à réaliser une cuisson de ladite surface revêtue de matériau plastique.

10. Procédé selon la revendication 9, **caractérisé en ce qu'**après l'étape de cuisson, la surface est refroidie lentement pour obtenir une surface d'aspect satiné.

11. Procédé selon la revendication 9, **caractérisé en ce qu'**après l'étape de cuisson, la surface est refroidie rapidement, par une trempe dans l'eau, pour obtenir une surface d'aspect brillant.

12. Procédé selon la revendication 1, **caractérisé en ce qu'**à l'issue du chauffage, on insuffle de l'oxygène sur ladite surface afin d'améliorer la mouillabilité de ladite surface, et par conséquent l'adhésion du matériau plastique.

13. Corps creux, en verre ou en matière poreuse, susceptible d'être obtenu par le procédé selon l'une des revendications précédentes, **caractérisé en ce que** sa surface externe et/ou sa surface interne est revêtue de manière uniforme par au moins une couche d'un matériau plastique.

14. Corps plat, en verre ou en matière poreuse, susceptible d'être obtenu par le procédé selon l'une des revendications 1 à 10, **caractérisé en ce que** sa surface externe est revêtue de manière uniforme par au moins une couche d'un matériau plastique.
